# EUROPEAN PATENT SPECIFICATION

(11) **EP 4 172 683 B1**
(45) Date of publication and mention of the grant of the patent: **11.02.2026**
(21) Application number: 21737159.0
(22) Date of filing: 16.06.2021
(51) Int. Cl.: G02B 27/01

(54) **PORTABLE, FOLDABLE AND ADJUSTABLE DEVICE FOR VIEWING CONTENT AND ASSOCIATED KIT**
TRAGBARE, FALTBARE UND VERSTELLBARE VORRICHTUNG ZUR ANZEIGE VON INHALT UND ZUGEHÖRIGES KIT
DISPOSITIF PORTABLE, PLIABLE ET RÉGLABLE POUR VISUALISER UN CONTENU ET KIT ASSOCIÉ

(30) Priority: 24.06.2020 IT 202000015160
(43) Date of publication of application: 03.05.2023
(73) Proprietor: VR Tourism S.r.l., 04023 Formia (LT) (IT)
(72) Inventor: CONSALVO, Alfonso, 04023 Formia (LT) (IT); GRANATA, Maurizio, 04023 Formia (LT) (IT)
(74) Representative: Fiammenghi, Eva
(86) International application number: PCT/IB2021/055312
(87) International publication number: WO 2021/260496

(56) References cited:
- US-A1- 2016 349 836
- US-A1- 2017 199 385
- US-A1- 2018 292 665

## Description

### Field of the art

The present invention operates in the field of multimedia devices for proposing content to a user. Even more in detail, the object of the present patent application is a portable viewer for users to use/access advertising or cultural content in an immersive mode. Also included in the invention is the method with which such content is selected and proposed.

### Prior art

In recent years, numerous technologies have been developed for using images in immersive mode, i.e. in virtual reality, or in augmented reality, i.e. superimposing digital images on real scenery.

The world of video games is particularly active in this field, providing continuous inspiration for the other industrial and commercial sectors that make use of digital images.

Immersive viewers have recently had a considerable impact on the market; these consist of devices which block the view of the scene and enable the focusing on a screen which could even be the same screen of the smartphone, which is inserted in a suitable housing of the viewer. Such devices, by making use of inertial sensors, are capable of varying the view point of the digital scenery as a function of the movement of the head and of the body of the user who wears it.

Such devices, even if they have been received as a kind of revolution in the market of electronic devices and accessories thereof, have several critical features.

First of all, they are rigid and bulky, and therefore it is quite improbable that a user will carry them outside the home. Secondly, they quite considerably block the view of the outside environment, rendering the use of the viewers quite dangerous if carried out in a non-protected place and not in the presence of people who monitor the movements of the user who wears the viewer.

Several international patents have tried to resolve several problems. One example thereof is the patent US2018292665 which claims a virtual reality viewer that can be integrated with printed materials, such as brochures, flyers, magazine or books. A user will be able to see the printed material relative to the products or services advertised and then activate a virtual reality scene on an electronic display not included in the invention, which can be the same smartphone of the user. The virtual reality viewer can be connected to the printed pages and "appear" as a pop-up when the pages are browsed. Such device is configured for allowing the housing of the smartphone of the user within the viewer and hence viewing the content in immersive mode. Even if this device partially resolves several problems tied to the viewers, it has other critical features that are not easy to resolve. Since this is an object with advertising purpose, it is an integral part of an information or advertising brochure. This is actually just a paper structure with n pairs of lenses at a generic focal distance between the pupils of a person. Theoretically, a user who receives the brochure, by openings its pages and encountering this particular structure, would have the intuition to insert his/her smartphone into the arranged housing, taking care to previously set it with the App, by means of which the content is viewed. A sequence of actions that is complex to say the least, and certainly of little commercial success. In addition, the use of the pop-up viewer is certainly limited over time, since due to its fragile structure, this is intended to be broken after a specific number of openings and closings of the pages. Another known document is US2017/199385.

Still due to its poor structure and design, it is evident that the distance between the lenses is overly generic to be that optimal for each person. In addition, it cannot be adjustable in any manner.

Our device for viewing multimedia content, unlike that described above and others available on the market, resolves all these problems and proposes a different and innovative object.

### Description of the invention

According to the present invention, a portable device for viewing multimedia content is attained, as well as an associated kit, which effectively solve the abovementioned problems. The device is a viewer preferably made of plastic, in which a housing is arranged, so to place an electronic device of the user therein, such a common smartphone.

As with the normal viewers, also that of the present invention is constituted by upper and lateral surfaces which block the peripheral view of the user and by an abutment surface provided with lenses at the eyes of the user. The lenses are in visual communication, by means of suitable holes, with the housing in which the smartphone is positioned.

The particular nature of the present viewer lies in the fact that, by means of a plurality of hinges, all surfaces thereof are divided into a left surface and a right surface, adapted to take on, in a reversible manner, a use configuration or a folded configuration. The use configuration is adapted to allow the use of said viewer for the use of said digital content; the folded configuration is adapted to reduce the volume occupied by said viewer to the least possible in order to comfortably transport it, simultaneously preventing its components from being damaged.

Advantageously, in order to maintain stable the use configuration, the lateral surfaces of the viewer are rotatably connected to the upper surfaces which, when rotated 90° with respect to said lateral surfaces, are adapted to provide rigidity to the entire structure. A pair of coupling devices, preferably of magnetic type, are arranged at the ends of the upper surfaces in order to couple them to each other and determine the stability of the use configuration.

In order to return to the folded configuration, it will be sufficient to disconnect the coupling devices, rotate the upper surfaces up to bringing each of them parallel to the relative lateral surface and, subsequently, crushing the lateral surfaces against each other.

Due to the suitable arrangement of fold lines, all the other viewer surfaces will fold, in a pre-established and provided manner, in order to reduce the thickness of the viewer to the smallest possible, and rendering it placeable even in a pocket or bag.

Possibly, in order to facilitate the folding, mechanical hinges will be present.

Advantageously, at the aforesaid lenses, the viewer, object of the present invention, provides for the presence of adjustment devices, adapted to bring said lenses close to or away from each other, rendering their distance adaptable to the face characteristics of any user.

Another advantage lies in the fact that the abutment surface that comprises said lenses is provided with a central hinge which divides the abutment surface into a left surface and a right surface. In this manner, by bringing one's face close to the abutment surface, this will bend, being adapted to the shape of the user's face.

The viewer described up to now, already per se new and innovative, as well as resolving the aforesaid technical problems, can be advantageously included in a kit for viewing multimedia content adapted to allow a user to use such content wherever he/she is situated.

It will be sufficient that the above-described viewer be implemented with a coupling system that allows the stable and reversible constraint thereof with a browsable support which can be, as a non-limiting example, a brochure containing tourist information.

In particular the constraint between the two components of the kit will take place at the bottom surface of the viewer and, still more specifically, in a manner such that the separation surface of the viewer coincides with the central fold of the browsable support. In such a manner, when the support is opened, by viewing the interior thereof, the viewer will automatically take on the use configuration. On the other hand, the closure of the support will determine the assumption of the folded configuration thereof.

Advantageously, the browsable support also comprises at least a hole suitably placed such that the objective of the video camera of the electronic device, when positioned within the housing of said viewer, coincides with said hole, allowing the use of augmented reality content.

In the versions with more accessories, the viewer comprises a common integrated rechargeable battery adapted to power supply at least a foldable display arranged at the bottom surface, so as to allow the use of multimedia content even using only the viewer, hence without a further electronic device like the smartphone of the user.

The rear surface of the viewer, still in one of the versions with more accessories, comprises a video camera, positioned such to be at the aforesaid hole of the browsable support when the viewer is connected with the browsable support.

Speakers and/or headphones, alternatively connected to the viewer or to the support, can also be advantageously comprised.

Finally, one of the preferred versions of the kit is that dedicated to tourism. In this particular embodiment, the back of the browsable support has the map of at least a preset itinerary which a tourist user is recommended to follow. The user needs only to activate the geolocation sensor of his/her own electronic device or, in a still improved version, exploit a geolocation sensor and a microprocessor integrated in the browsable support. Due to the recognition of the geographic position of the user, pre-established multimedia content will then be proposed for that position, for example illustrating the history of that particular place.

The advantages offered by the present invention are evident in light of the description described up to now and will be even clearer due to the enclosed figures and to the relative detailed description.

### Description of the figures

The invention will be described hereinbelow in at least a preferred embodiment, by way of non-limiting example with the aid of the enclosed figures, in which:

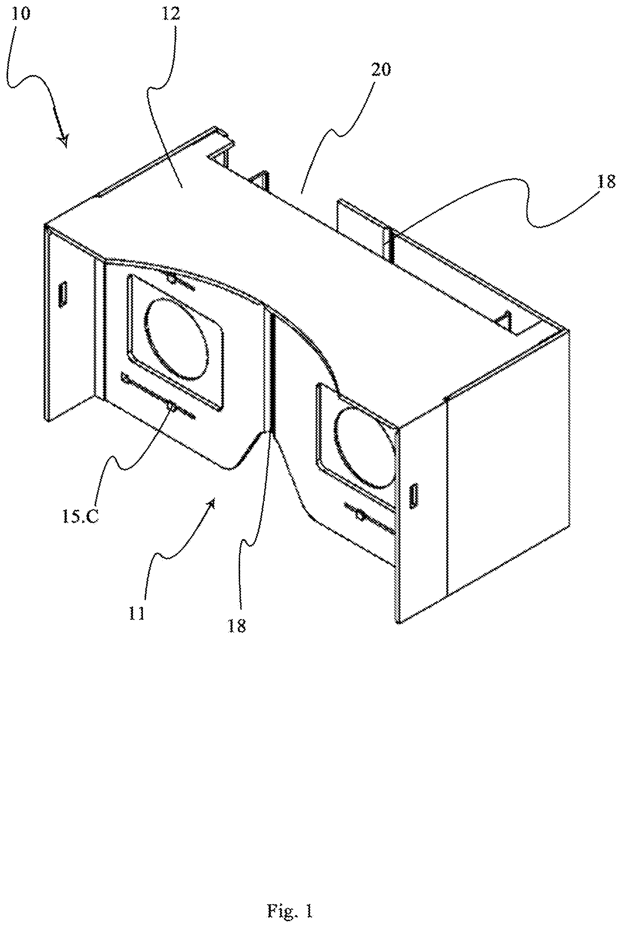

- FIGURE 1 shows a three-dimensional view of the present viewer 10, showing it in the use configuration.

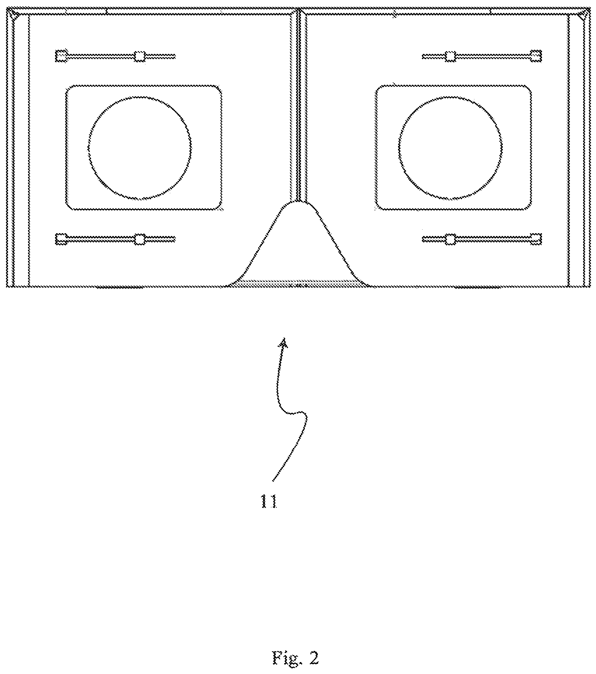

- FIGURE 2 shows a front view of the viewer 10.

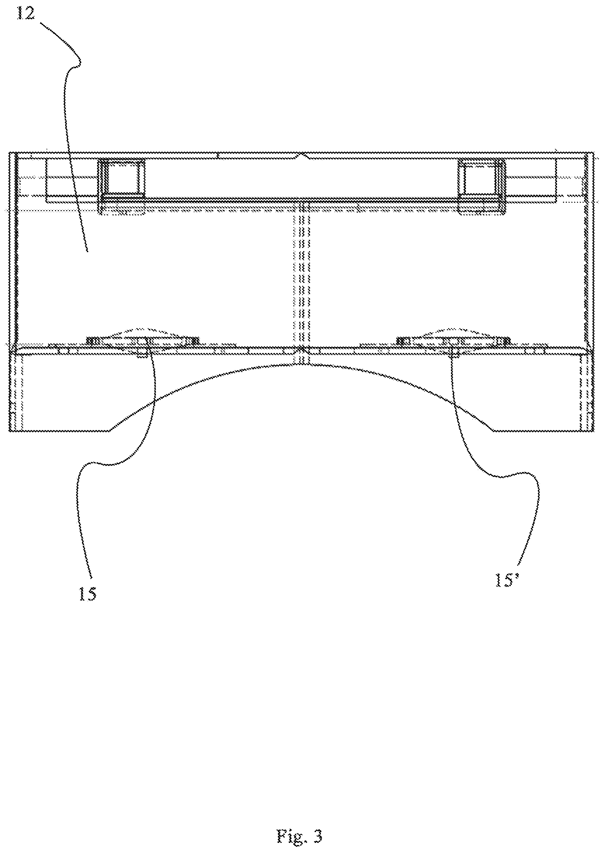

- FIGURE 3 shows an upper face of the viewer 10, still in the use configuration.

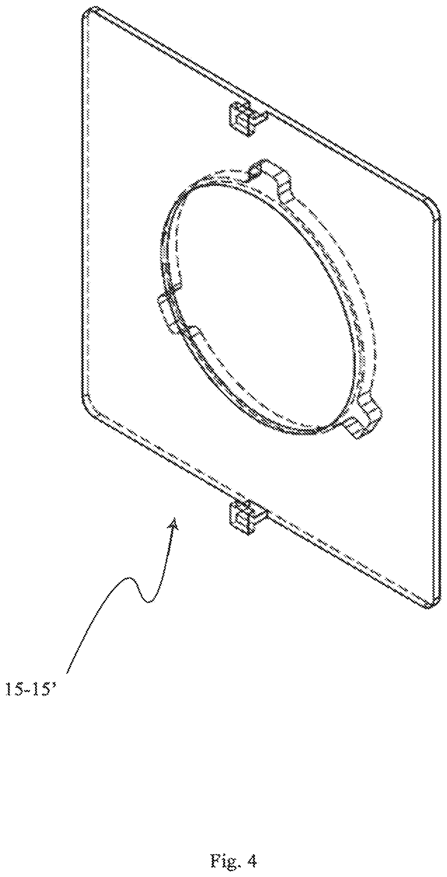

- FIGURE 4 shows in detail the configuration of the lenses 15-15'.

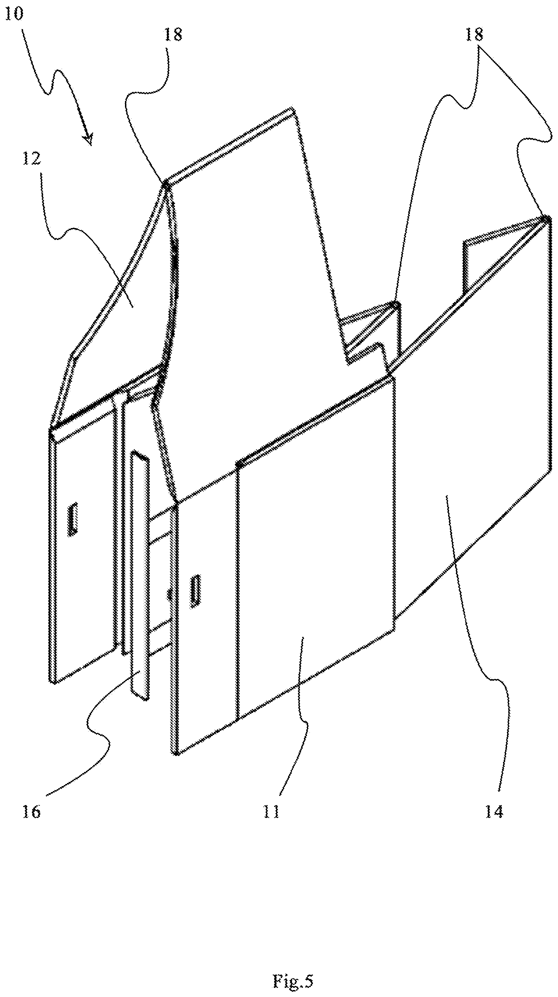

- FIGURE 5 illustrates the viewer 10 in the folded configuration.

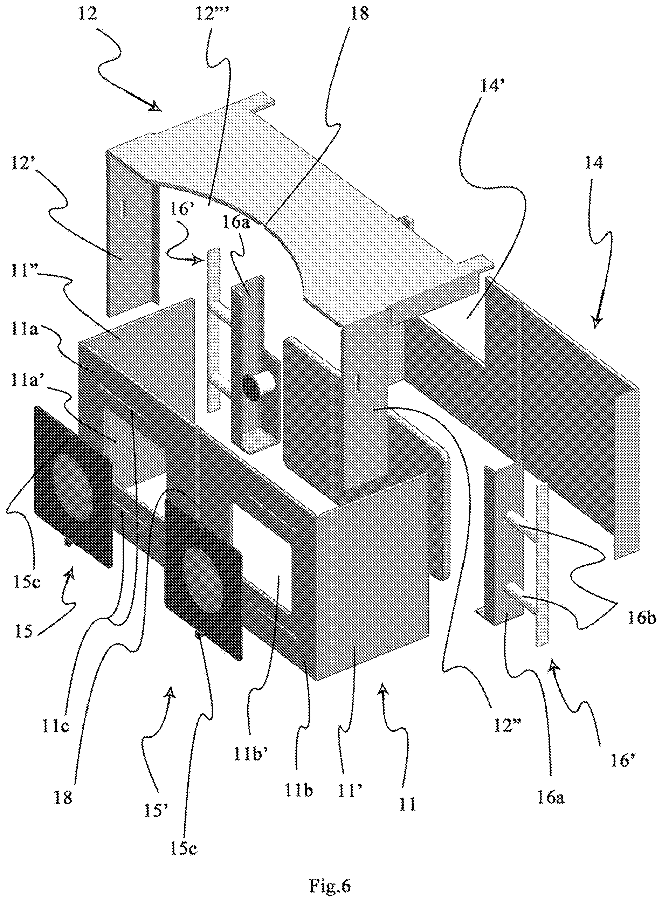

- FIGURE 6 shows a three-dimensional exploded view of the viewer 10 in which all the components are clearly visible, both those external and internal.

### Detailed description of the invention

Omitting the version of the kit of the present invention, which was described before, we will now describe in detail the components that constitute the viewer 10. i.e. the main object of the present invention.

Said viewer 10 is adapted to take on, in a reversible manner, a use configuration or a folded configuration. In the use configuration the viewer 10 allows the use of digital content; in the folded configuration, however, the volume occupied by said viewer 10 is considerably reduced such to be able to easily carry it, simultaneously preventing its components from being damaged.

The suitable arrangement of a plurality of fold lines 18 allows the modification of the configuration of said viewer 10 in a simple and pre-established manner.

The structural components of said viewer 10 are the following:
- a front element 11 comprising a pair of lateral surfaces 11'-11'' and a pair of front surfaces 11.a-11.b configured for being placed in contact with the face of the user at the height of the eyes. Each front surface 11.a-11.b comprises a hole 11.a'-11.b' at the height of the eyes of the user. Within the hole, a lens 15-15', possibly graduated, is positioned, comprising at least a grip projection 15.c. The latter is adapted to be inserted, in a reversibly slidable manner, within a recess 11.c of the corresponding front surface 11.a-11.b. Due to this expedient, the movement, by the user, of said grip projections 15.c allows the adjustment of the distance between said lenses 15-15', thus rendering the viewer 10 adaptable to the face characteristics of the user. The lateral surfaces 11'-11", in the use configuration, are positioned at right angle with respect to the front surfaces 11.a-11.b. The front element 11 comprises at least a fold line 18 which separates the front left surface 11.a from the front right surface 11.b and at least a pair of further fold lines 18 which separate a front surface 11.a-11.b from the contiguous lateral surface 11'-11'';
- an upper element 12 comprising a pair of lateral coupling surfaces 12'-12'' placed at the sides of an upper surface provided with a semicircular recess 12'" adapted to receive the forehead of the user. The upper element 12 is adapted to be engaged on the upper part with front element 11 and to block the visual field, both upper and lateral of the user. The upper element 12 comprises at least a pair of fold lines 18 at the edges between the upper surface and the respective lateral coupling surfaces 12'-12". The upper element 12 also comprising at least a fold line 18 at the median axis of said upper surface;
- a rear element 14, vertically divided in half by a fold line 18 and provided with an opening 14' sized for allowing the crossing by a common smartphone or another electronic device for viewing images. The rear element 14 is provided with lateral tabs adapted to be engaged with the front element 11 defining a housing 20 in which said electronic device is positioned. The housing 20 is therefore situated behind the lenses 15-15', such that a user, by setting his/her face on the front surface 11 and looking through the lenses 15-15', can view the images on the screen of the electronic device inserted in the housing 20;
- at least a pair of positioning devices 16-16', adapted to be positioned in the housing 20 in order to retain the electronic device in the position provided for a correct viewing of the images by the user; each positioning device comprises at least an abutment surface and a lateral support. The abutment surface 16.a is adapted to press one side of the electronic device due to the lateral support 16.b constituted by a small spring piston, which presses towards the internal wall of said housing 20.

In the preferred embodiment of the present invention, the viewer 10 is entirely made of a plastic polymer.

Possibly, mechanical hinges are arranged at said fold lines 18.

## Claims

1. Portable, foldable and adjustable device, for viewing multimedia content, adapted to allow the use of digital content by a user wherever he/she is situated, wherein said device is constituted by a viewer (10) adapted to take on, in a reversible manner, a use configuration or a folded configuration; said use configuration being adapted to allow the use of said viewer (10) for using said digital content; said folded configuration being adapted to reduce the volume occupied by said viewer (10) to the minimum possible in order to transport it in a convenient manner, simultaneously preventing its components from being damaged; a plurality of fold lines (18), suitably positioned, allow the modification of the configuration of said viewer (10) in a simple and pre-established manner; said viewer (10) comprising:
- a front element (11) comprising a pair of lateral surfaces (11'-11") and a pair of front surfaces (11.a-11.b) configured for contacting the face of the user at the height of the eyes; each front surface (11.a-11.b) comprising a corresponding hole (11.a'-11.b') positioned at an eye of the user; each front surface (11.a-11.b) also comprising at least one recess (11.c) adapted to be engaged with a grip projection (15.c) of a lens (15-15') adapted to be housed in the corresponding hole (11.a'-11.b'); said lateral surfaces (11'-11"), in the use configuration, being positioned at right angle with respect to said front surfaces (11.a-11.b); said front element (11) comprising at least one fold line (18) which separates the left front surface (11.a) from the right front surface (11.b) and at least one pair of fold lines (18) which separate a front surface (11.a-11.b) from the contiguous lateral surface (11'-11'');
- a pair of lenses (15-15'), possibly graduated, adapted to be housed at said holes (11.a'-11.b') of said front surfaces (11.a-11.b); said lenses (15-15') comprising at least one grip projection (15.c) adapted to be inserted, in a reversibly slidable manner, within said recess (11.c) of the corresponding front surface (11.a-11.b); the movement, by the user, of said grip projections (15.c) allowing the adjustment of the distance between said lenses (15-15'), rendering the distance thereof adaptable to the face characteristics of the user;
- an upper element (12) comprising an upper surface and a pair of lateral coupling surfaces (12'-12") placed at the sides of an upper surface provided with a semicircular recess (12‴); said upper element (12) being adapted to be engaged on the upper part with said front element (11) and to block the visual field, both upper and lateral of the user; said recess (12‴) being adapted to receive the forehead of the user; said upper element (12) comprising at least one pair of fold lines (18) at the edges between said upper surface and the respective lateral coupling surfaces (12'-12"); said upper element (12) also comprising at least one fold line (18) at the median axis of said upper surface;
- a rear element (14), vertically divided in half by a fold line (18) and provided with an opening (14') sized for allowing the crossing by a common smartphone; said rear element (14) being provided with lateral tabs adapted to be engaged with said front element (11), defining a housing (20) in which an electronic device as a smartphone or other image reproduction device is positioned; said housing (20) thus being situated behind said lenses (15-15'), in a manner such that a user, by setting his/her face on said front surface (11) and looking through said lenses (15-15'), can view the images on the screen of said electronic device inserted in said housing (20);
- at least one pair of positioning devices (16-16'), adapted to be positioned within said housing (20) and adapted to retain said electronic device in the provided position for a correct viewing of the images by the user; each positioning device (16-16') comprising at least one abutment surface (16.a) and a lateral support (16.b); said abutment surface (16.a) being adapted to press one side of said electronic device due to said lateral support (16.b) constituted by a small spring piston which presses towards the internal wall of said housing (20).

2. Portable device, foldable and adjustable for viewing multimedia content, according to the preceding claim 1, wherein all the surfaces of said viewer (10) are made of a plastic polymer.

3. Portable device, foldable and adjustable for viewing multimedia content, according to any one of the preceding claims 1 or 2, wherein mechanical hinges are arranged at said fold lines (18).

4. Portable kit for viewing multimedia content, adapted to allow the use of digital content by a user wherever he/she is situated wherein it comprises:
- a viewer (10) according to any one of the preceding claims, provided with a coupling device;
- a browsable support, provided with a corresponding coupling device adapted to be engaged, in a reversible manner, with the rear element (14) of said viewer (10); said coupling device being configured for positioning said viewer (10) at the central fold of said browsable support in a manner such that the opening and the closing of the browsable support determines, in an automatic manner, the arrangement of the viewer (10) in the use configuration, when the support is open, and its transformation into the folded configuration when the support is closed by the user; said browsable support also comprising at least one hole positioned in a manner such that the objective of the video camera of the electronic device, to be positioned within the housing (20) of said viewer (10), coincides with said hole, allowing the use of augmented reality content.

5. Portable kit for viewing multimedia content, according to the preceding claim 4, wherein said viewer (10) comprises a common integrated rechargeable battery and at least one foldable display at said housing (20) so as to enable the use of multimedia content.

6. Portable kit for viewing multimedia content, according to the preceding claim 5, wherein the rear element (14) of said viewer (10) comprises a video camera positioned so as to be aligned with said hole of the browsable support when the viewer (10) is coupled to said browsable support.

7. Portable kit for viewing multimedia content, according to any one of the preceding claims 4 to 6, wherein said browsable support and/or said viewer (10) comprise speakers.

8. Portable kit for viewing multimedia content, according to any one of the preceding claims 4 to 7, wherein said browsable support and/or said viewer (10) comprise headphones.

9. Portable kit for viewing multimedia content, according to any one of the preceding claims 4 to 8, wherein said browsable support and/or said viewer (10) comprise a geolocation sensor and a CPU microprocessor adapted to propose predetermined multimedia content when a preset geographic position is detected, e.g. close to a monument.

10. Portable kit for viewing multimedia content, according to the preceding claim 9, wherein said browsable support comprises the printing of at least one geographic map indicating at least one travel, artistic or cultural itinerary to be followed in order to make use of all the preloaded multimedia content.

## Patentansprüche

1. Tragbare, faltbare und verstellbare Vorrichtung zum Betrachten von Multimedia-Inhalten, die dazu ausgelegt ist, die Verwendung von digitalen Inhalten durch einen Nutzer/eine Nutzerin zu ermöglichen, unabhängig davon, wo er/sie sich befindet, wobei die Vorrichtung durch einen Betrachter (10), der dazu ausgelegt ist, auf eine reversible Weise eine Gebrauchskonfiguration oder eine gefaltete Konfiguration anzunehmen, gebildet ist; wobei die Gebrauchskonfiguration dazu ausgelegt ist, die Verwendung des Betrachters (10) zur Nutzung der digitalen Inhalte zu ermöglichen; wobei die gefaltete Konfiguration dazu ausgelegt ist, das von dem Betrachter (10) eingenommene Volumen auf das minimal Mögliche zu verringern, um ihn auf bequeme Weise transportieren zu können und gleichzeitig seine Komponenten daran zu hindern, beschädigt zu werden; mehrere Faltlinien (18), die in geeigneter Weise positioniert sind, ermöglichen die Änderung der Konfiguration des Betrachters (10) auf einfache und vorab festgelegte Weise; wobei der Betrachter (10) aufweist:
- ein vorderes Element (11), das ein Paar seitlicher Oberflächen (11'-11") und ein Paar vorderer Oberflächen (11.a-11.b), die in Konfiguration dazu ausgebildet sind, das Gesicht des Nutzers/der Nutzerin auf Höhe der Augen zu berühren, aufweist; wobei jede vordere Oberfläche (11.a-11.b) ein entsprechendes, an einem Auge des Nutzers/der Nutzerin angeordnetes Loch (11.a'-11.b') aufweist; wobei jede vordere Oberfläche (11.a-11.b) außerdem zumindest eine Aussparung (11.c) aufweist, die dazu ausgelegt ist, mit einem Griffvorsprung (15.c) einer Linse (15-15') in Eingriff gebracht zu werden, die dazu ausgelegt ist, in dem entsprechenden Loch (11.a'-11.b') untergebracht zu werden; wobei die seitlichen Oberflächen (11'-11") in der Gebrauchskonfiguration in Bezug auf die vorderen Oberflächen (11.a-11.b) im rechten Winkel positioniert sind; wobei das vordere Element (11) zumindest eine Faltlinie (18), die die linke vordere Oberfläche (11.a) von der rechten vorderen Oberfläche (11.b) trennt, und zumindest ein Paar von Faltlinien (18), die eine vordere Oberfläche (11.a-11.b) von der angrenzenden seitlichen Oberfläche (11'-11") trennen, aufweist;
- ein Paar Linsen (15-15'), die möglicherweise graduiert sind und dazu ausgelegt sind, an den Löchern (11.a' -11.b') der vorderen Oberflächen (11.a-11.b) untergebracht zu werden; wobei die Linsen (15-15') zumindest einen Griffvorsprung (15.c) aufweisen, der dazu ausgelegt ist, auf eine reversibel verschiebbare Weise in die Aussparung (11.c) der entsprechenden vorderen Oberfläche (11.a-11.b) eingebracht zu werden; wobei die Bewegung der Griffvorsprünge (15.c) durch den Nutzer/die Nutzerin die Einstellung des Abstands zwischen den Linsen (15-15') ermöglicht, wodurch der Abstand an die Gesichtsmerkmale des Nutzers/der Nutzerin angepasst werden kann;
- ein oberes Element (12), das eine obere Oberfläche und einem Paar seitlicher Kupplungsoberflächen (12'-12") aufweist, die an den Seiten einer mit einer halbkreisförmigen Aussparung (12‴) versehen oberen Oberfläche angeordnet sind; wobei das obere Element (12) dazu ausgelegt, an dem oberen Teil mit dem vorderen Element (11) in Eingriff gebracht werden kann und das Sichtfeld sowohl oben als auch seitlich des Nutzers/der Nutzerin blockiert; wobei die Aussparung (12"') dazu ausgelegt ist, die Stirn des Nutzers/der Nutzerin aufzunehmen; wobei das obere Element (12) zumindest ein Paar Faltlinien (18) an den Rändern zwischen der oberen Oberfläche und den jeweiligen seitlichen Kupplungsflächen (12'-12") aufweist; wobei das obere Element (12) außerdem zumindest eine Faltlinie (18) an der Mittelachse der oberen Oberfläche aufweist;
- ein hinteres Element (14), das durch eine Faltlinie (18) vertikal in zwei Hälften geteilt ist und mit einer Öffnung (14'), die so dimensioniert ist, dass ein übliches Smartphone hindurchpasst, versehen ist; wobei das hintere Element (14) mit seitlichen Laschen versehen ist, die dazu ausgelegt sind, mit dem vorderen Element (11) in Eingriff gebracht werden können, wodurch ein Gehäuse (20), in dem ein elektronisches Gerät wie ein Smartphone oder eine anderes Bildwiedergabegerät positioniert wird, definiert wird; wobei sich das Gehäuse (20) somit hinter den Linsen (15-15') befindet, und zwar auf eine Weise, dass ein Nutzer/eine Nutzerin, indem er/sie sein/ihr Gesicht an die vordere Seite (11) hält und durch die Linsen (15-15') schaut, die Bilder auf dem Bildschirm des in das Gehäuse (20) eingesetzten elektronischen Geräts sehen kann;
- zumindest ein Paar Positionierungsvorrichtungen (16-16'), die dazu ausgelegt sind, innerhalb des Gehäuses (20) positioniert zu werden und dazu ausgelegt sind, die elektronische Vorrichtung in der vorgesehenen Position zu halten, um eine korrekte Betrachtung der Bilder durch den Nutzer/die Nutzerin zu ermöglichen; wobei jede Positionierungsvorrichtung (16-16') zumindest eine Anlagefläche (16.a) und eine seitliche Stütze (16.b) aufweist; wobei die Anlagefläche (16.a) dazu ausgelegt ist, eine Seite des elektronischen Geräts aufgrund der seitlichen Stütze (16.b), die durch einen kleinen Federkolben, der gegen die Innenwand des Gehäuses (20) drückt, gebildet wird, zu drücken.

2. Tragbare Vorrichtung, faltbar und einstellbar zum Betrachten von Multimedia-Inhalten, gemäß dem vorstehenden Anspruch 1, wobei alle Oberflächen des Betrachters (10) aus einem Kunststoffpolymer hergestellt sind.

3. Tragbare Vorrichtung, faltbar und einstellbar zum Betrachten von Multimedia-Inhalten, gemäß einem der vorstehenden Ansprüche 1 oder 2, wobei mechanische Gelenke an den Faltlinien (18) angeordnet sind.

4. Tragbares Kit zum Betrachten von Multimedia-Inhalten, das dazu ausgelegt ist, die Verwendung von digitalen Inhalten durch einen Nutzer/eine Nutzerin zu ermöglichen, unabhängig davon, wo er/sie sich befindet, wobei es aufweist:
- einen Betrachter (10) gemäß einem der vorstehenden Ansprüche, der mit einer Kupplungseinrichtung versehen ist;
- einen durchsuchbaren Träger, der mit einer korrespondierenden Kupplungseinrichtung, die dazu ausgelegt ist, auf eine reversible Weise mit dem hinteren Element (14) des Betrachters (10) in Eingriff gebracht zu werden, versehen ist; wobei die Kupplungseinrichtung zum Positionieren des Betrachters (10) an der mittleren Falz des durchsuchbaren Trägers auf eine Weise ausgelegt ist, dass das Öffnen und das Schließen des durchsuchbaren Trägers auf eine automatische Weise die Anordnung des Betrachters (10) in der Gebrauchskonfiguration bestimmt, wenn der Träger offen ist, und seine Umwandlung in die gefaltete Konfiguration, wenn der Träger durch den Nutzer geschlossen wird; wobei der durchsuchbare Träger außerdem zumindest ein Loch aufweist, das auf eine Weise positioniert ist, dass das Objektiv der Videokamera des Geräts, das innerhalb des Gehäuses (20) des Betrachters (10) positioniert werden soll, mit dem Loch übereinstimmt, was die Verwendung von Augmented-Reality-Inhalten ermöglicht.

5. Tragbares Kit zum Betrachten von Multimedia-Inhalten gemäß dem vorstehenden Anspruch 4, wobei der Betrachter (10) eine übliche integrierte wiederaufladbare Batterie und zumindest ein faltbares Display an dem Gehäuse (20) aufweist, um die Verwendung von Multimedia-Inhalten zu ermöglichen.

6. Tragbares Kit zum Betrachten von Multimedia-Inhalten gemäß dem vorstehenden Anspruch 5, wobei das hintere Element (14) des Betrachters (10) eine Videokamera aufweist, die so positioniert ist, dass sie mit der Öffnung des durchsuchbaren Trägers fluchtet, wenn der Betrachter (10) mit dem durchsuchbaren Träger gekoppelt ist.

7. Tragbares Kit zum Betrachten von Multimedia-Inhalten gemäß einem der vorstehenden Ansprüche 4 bis 6, wobei der durchsuchbare Träger und/oder der Betrachter (10) Lautsprecher aufweist.

8. Tragbares Kit zum Betrachten von Multimedia-Inhalten gemäß einem der vorstehenden Ansprüche 4 bis 7, wobei der durchsuchbare Träger und/oder der Betrachter (10) Kopfhörer aufweist.

9. Tragbares Kit zum Betrachten von Multimedia-Inhalten gemäß einem der vorstehenden Ansprüche 4 bis 8, wobei der durchsuchbare Träger und/oder der Betrachter (10) einen Geolokalisierungssensor und einen CPU-Mikroprozessor aufweisen, der dazu ausgelegt ist, vorgegebene Multimedia-Inhalte vorzuschlagen, wenn eine voreingestellte geografische Position detektiert wird, z. B. in der Nähe eines Denkmals.

10. Tragbares Kit zum Betrachten von Multimedia-Inhalten gemäß dem vorstehenden Anspruch 9, wobei der durchsuchbare Träger das Drucken zumindest einer geografischen Karte aufweist, die zumindest eine Reise-, Kunst- oder Kulturroute anzeigt, der zu folgen ist, um alle vorinstallierten Multimedia-Inhalte zu nutzen.

## Revendications

1. Dispositif portable, pliable et ajustable, pour la visualisation de contenu multimédia, adapté pour permettre l'utilisation d'un contenu numérique par un/une utilisateur/utilisatrice où qu'il/elle se trouve, dans lequel ledit dispositif est constitué d'une visionneuse (10) adaptée pour adopter, de manière réversible, une configuration d'utilisation ou une configuration pliée ; ladite configuration d'utilisation étant adaptée pour permettre l'utilisation de ladite visionneuse (10) pour utiliser ledit contenu numérique ; ladite configuration pliée étant adaptée pour réduire au minimum le volume occupé par ladite visionneuse (10) afin de la transporter de manière commode, tout en empêchant ses composants d'être endommagés ; une pluralité de lignes de pli (18), positionnées de manière appropriée, permettent la modification de la configuration de ladite visionneuse (10) de manière simple et préétablie ; ladite visionneuse (10) comprenant :
- un élément avant (11) comprenant une paire de surfaces latérales (11'-11") et une paire de surfaces avant (11.a-11.b) configurées pour entrer en contact avec le visage de l'utilisateur/l'utilisatrice à hauteur des yeux ; chaque surface avant (11.a-11.b) comportant un trou correspondant (11.a'-11.b') positionné au niveau d'un œil de l'utilisateur/l'utilisatrice ; chaque surface avant (11.a-11.b) comprenant également au moins un évidement (11.c) adapté pour s'engager avec une saillie de préhension (15.c) d'une lentille (15-15') adaptée pour être logée dans le trou correspondant (11.a'-11.b') ; lesdites surfaces latérales (11'-11''), dans la configuration d'utilisation, étant positionnées à angle droit par rapport auxdites surfaces avant (11.a-11.b) ; ledit élément avant (11) comprenant au moins une ligne de pli (18) qui sépare la surface avant gauche (11.a) de la surface avant droite (11.b) et au moins une paire de lignes de pli (18) qui séparent une surface avant (11.a-11.b) de la surface latérale (11'-11") contiguë ;
- une paire de lentilles (15-15'), éventuellement graduées, adaptées pour être logées sur lesdits trous (11.a'-11.b') desdites surfaces avant (11.a-11.b) ; lesdites lentilles (15-15') comprenant au moins une saillie de préhension (15.c) adaptée pour être insérée, de manière coulissante réversible, dans ledit évidement (11.c) de la surface avant (11.a-11.b) correspondante ;
le déplacement, par l'utilisateur/l'utilisatrice, desdites saillies de préhension (15.c) permettant l'ajustement de la distance entre lesdites lentilles (15-15'), rendant leur distance adaptable aux caractéristiques faciales de l'utilisateur/l'utilisatrice ;
- un élément supérieur (12) comprenant une surface supérieure et une paire de surfaces de couplage latérales (12'-12'') placées sur les côtés d'une surface supérieure pourvue d'un évidement semi-circulaire (12‴) ; ledit élément supérieur (12) étant adapté pour s'être engagé sur la partie supérieure avec ledit élément avant (11) et pour bloquer le champ visuel, tant supérieur que latéral de l'utilisateur/l'utilisatrice ; ledit évidement (12‴) étant adapté pour recevoir le front de l'utilisateur/l'utilisatrice ; ledit élément supérieur (12) comprenant au moins une paire de lignes de pli (18) sur les bords entre ladite surface supérieure et les surfaces de couplage latérales (12'-12'') respectives ; ledit élément supérieur (12) comprenant également au moins une ligne de pli (18) sur l'axe médian de ladite surface supérieure ;
- un élément arrière (14), divisé verticalement en deux par une ligne de pli (18) et pourvu d'une ouverture (14') dimensionnée pour permettre le passage d'un téléphone intelligent ordinaire ; ledit élément arrière (14) étant pourvu de pattes latérales adaptées pour être engagées avec ledit élément avant (11), définissant un logement (20) dans lequel est positionné un dispositif électronique tel qu'un téléphone intelligent ou un autre appareil de reproduction d'image ; ledit logement (20) étant ainsi situé derrière les lentilles (15-15'), de manière à ce qu'un/une utilisateur/utilisatrice, en posant son visage sur la surface avant (11) et en regardant à travers lesdites lentilles (15-15'), puisse visualiser les images sur l'écran dudit dispositif électronique inséré dans ledit logement (20) ;
- au moins une paire de dispositifs de positionnement (16-16'), adaptés pour être positionnés à l'intérieur dudit logement (20) et adaptés pour garder ledit dispositif électronique dans la position prévue pour une visualisation correcte des images par l'utilisateur/l'utilisatrice ; chaque dispositif de positionnement (16-16') comprenant au moins une surface de butée (16.a) et un support latéral (16.b) ; ladite surface de butée (16.a) étant adaptée pour presser un côté dudit dispositif électronique grâce audit support latéral (16.b) constitué d'un petit piston à ressort qui presse vers la paroi interne dudit logement (20).

2. Dispositif portable, pliable et ajustable pour la visualisation de contenu multimédia, selon la revendication 1 précédente, dans lequel toutes les surfaces de ladite visionneuse (10) sont en polymère plastique.

3. Dispositif portable, pliable et ajustable pour la visualisation de contenu multimédia, selon l'une des revendications 1 ou 2 précédentes, dans lequel des charnières mécaniques sont agencées sur lesdites lignes de pli (18).

4. Kit portable de visualisation de contenu multimédia, adapté pour permettre l'utilisation d'un contenu numérique par un/une utilisateur/utilisatrice où qu'il/elle se trouve, dans lequel le kit comprend :
- une visionneuse (10) selon l'une des revendications précédentes, pourvue d'un dispositif de couplage ;
- un support navigable, pourvu d'un dispositif de couplage correspondant adapté pour être engagé, de manière réversible, avec l'élément arrière (14) de ladite visionneuse (10) ; ledit dispositif de couplage étant configuré pour positionner ladite visionneuse (10) sur le pli central dudit support navigable de manière à ce que l'ouverture et la fermeture du support navigable déterminent, de manière automatique, l'agencement de la visionneuse (10) dans la configuration d'utilisation, lorsque le support est ouvert, et sa transformation en la configuration pliée lorsque le support est fermé par l'utilisateur/l'utilisatrice ; ledit support navigable comprenant également au moins un trou positionné de manière à ce que l'objectif de la caméra vidéo du dispositif électronique, à positionner à l'intérieur du logement (20) de ladite visionneuse (10), coïncide avec ledit trou, permettant l'utilisation de contenu de réalité augmentée.

5. Kit portable de visualisation de contenu multimédia, selon la revendication 4 précédente, dans lequel ladite visionneuse (10) comprend une batterie rechargeable intégrée ordinaire et au moins un affichage pliable sur ledit logement (20) de façon à permettre l'utilisation de contenu multimédia.

6. Kit portable de visualisation de contenu multimédia, selon la revendication 5 précédente, dans lequel l'élément arrière (14) de ladite visionneuse (10) comprend une caméra vidéo positionnée de façon à être alignée avec ledit trou du support navigable lorsque la visionneuse (10) est couplée audit support navigable.

7. Kit portable de visualisation de contenu multimédia, selon l'une des revendications 4 à 6 précédentes, dans lequel ledit support navigable et/ou ladite visionneuse (10) comprennent des haut-parleurs.

8. Kit portable de visualisation de contenu multimédia, selon l'une des revendications 4 à 7 précédentes, dans lequel ledit support navigable et/ou ladite visionneuse (10) comprennent des écouteurs.

9. Kit portable de visualisation de contenu multimédia, selon l'une des revendications 4 à 8 précédentes, dans lequel ledit support navigable et/ou ladite visionneuse (10) comprennent un capteur de géolocalisation et un microprocesseur CPU adapté pour proposer un contenu multimédia prédéterminé lorsqu'une position géographique prédéfinie est détectée, par exemple à proximité d'un monument.

10. Kit portable de visualisation de contenu multimédia, selon la revendication 9 précédente, dans lequel ledit support navigable comprend l'impression d'au moins une carte géographique indiquant au moins un itinéraire de voyage, artistique ou culturel à suivre afin d'utiliser l'ensemble du contenu multimédia préchargé.
